# FASCICULE DE BREVET EUROPEEN

(11) **EP 0 778 111 B1**
(45) Date de publication et mention de la délivrance du brevet: **09.09.1998**
(21) Numéro de dépôt: 96402624.9
(22) Date de dépôt: 04.12.1996
(51) Int. Cl.: B25J 19/06

(54) **Module d'arrêt d'urgence pour robot**
Notausschaltvorrichtung für Roboter
Emergency stopping module for a robot

(30) Priorité: 06.12.1995 FR 9514415
(43) Date de publication de la demande: 11.06.1997
(73) Titulaire: COMPTOIR COMMERCIAL DE MECANIQUE ET D'OUTILLAGES DE PRECISION C C M O P, 95100 Argenteuil (FR)
(72) Inventeur: Farina, Daniel Yves, 92340 Bourg la Reine (FR)
(74) Mandataire: Chameroy, Claude

(56) Documents cités:
- DE-A- 4 131 602
- FR-A- 2 703 942
- US-A- 5 002 173

## Description

La présente invention concerne un module d'arrêt d'urgence pour robot ou analogue, du type comprenant un corps formant chambre de compression et alimenté en air sous pression, muni d'une ouverture normalement obturée par un plateau intérieur solidaire d'un flasque extérieur, le corps et le flasque extérieur étant respectivement destinés à être solidaires de deux éléments du robot, le plateau intérieur s'écartant de l'ouverture lorsque le robot est soumis à des sollicitations anormales, laissant l'air s'échapper de la chambre de compression.

Ainsi, lorsque le robot est soumis à des sollicitations anormales, aussi bien en flexion qu'en rotation ou en compression, le plateau intérieur s'écarte de l'ouverture et laisse l'air s'échapper de la chambre de compression, tout en permettant un mouvement relatif des deux parties du module. La chute de pression à l'intérieur de la chambre est alors immédiatement détectée, grâce à un capteur approprié, ce qui permet d'arrêter le fonctionnement du robot et d'éviter ainsi des accidents.

Un tel dispositif de sécurité est très efficace et son usage s'est maintenant largement généralisé. Par exemple, le document DE-A-41 31 602 décrit un module d'arrêt d'urgence pourvu d'un système tige-ressort qui assure le maintien du plateau en l'absence de pression dans la chambre (arrêt volontaire du robot). Toutefois, après son déclenchement, une intervention humaine est nécessaire pour remettre le module en position, avant de pouvoir faire fonctionner à nouveau le robot.

La présente invention a donc pour but principal de remédier à cet inconvénient et, pour ce faire, elle a pour objet un module d'arrêt d'urgence du type susmentionné qui se caractérise essentiellement en ce qu'il est pourvu d'un dispositif de réarmement automatique constitué par un vérin aménagé dans le flasque et dont la tige traverse le plateau intérieur pour venir prendre appui sur le fond du corps.

Ainsi, lorsque le module se déclenche à la suite d'une sollicitation anormale, il peut, dans la plupart des cas, être remis automatiquement en position ou réarmé, grâce à l'action du vérin.

De préférence, le vérin est constamment alimenté en fluide sous pression, de manière que sa tige prenne appui en permanence sur le fond du corps avec une force déterminée.

Ainsi, le module peut se réarmer automatiquement, dès que cesse la sollicitation anormale.

Une forme d'exécution de l'invention est décrite ci-après à titre d'exemple, en référence aux dessins annexés dans lesquels :
- la figure 1 est une vue de dessus d'un module d'arrêt d'urgence conforme à l'invention ;
- la figure 2 est une vue de côté de ce module ;
- la figure 3 est une vue en coupe suivant la ligne III-III de la figure 4 ;
- la figure 4 est une vue en coupe suivant la ligne IV-IV de la figure 1 ; et
- la figure 5 est une vue en coupe analogue à la figure 4 montrant le module en position de déclenchement de l'arrêt d'urgence.

Le module représenté sur les figures annexées comprend tout d'abord un corps creux 1 de forme cylindrique pourvu d'une plaque de fond 2 à embase carrée. Le corps 1 constitue ainsi une chambre de compression 3 alimentée en air comprimé par un embout 4.

Du côté opposé à la plaque de fond 2, le corps 1 est pourvu d'une ouverture centrale 5 normalement obturée par un plateau intérieur 6 qui est rendu solidaire d'un flasque extérieur cylindrique 7 par des vis telles que 8.

Le corps 1 et le flasque 7 sont respectivement solidaires de deux éléments d'un robot ou analogue non représenté. Le flasque cylindrique 7 sera par exemple fixé à la pince du robot, tandis que l'embase carrée de la plaque de fond 2 sera fixée sur le bras du robot.

Le corps 1 est par ailleurs pourvu de deux pions sphériques 9 faisant saillie à l'intérieur de la chambre de compression 3 et qui viennent normalement se loger dans des cuvettes correspondantes 10 aménagées sur le plateau intérieur 6.

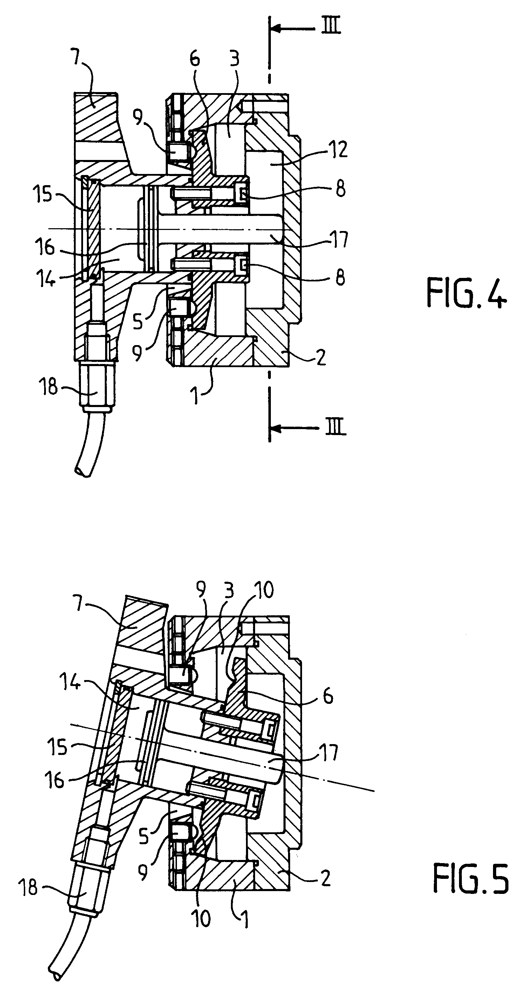

Ainsi, lorsque la pince du robot se trouve soumise à une sollicitation anormale en flexion ou en compression, le plateau intérieur 6 s'écarte de l'ouverture 5, comme représenté sur la figure 5, de sorte que l'air peut alors s'échapper de la chambre de compression 3 par ladite ouverture.

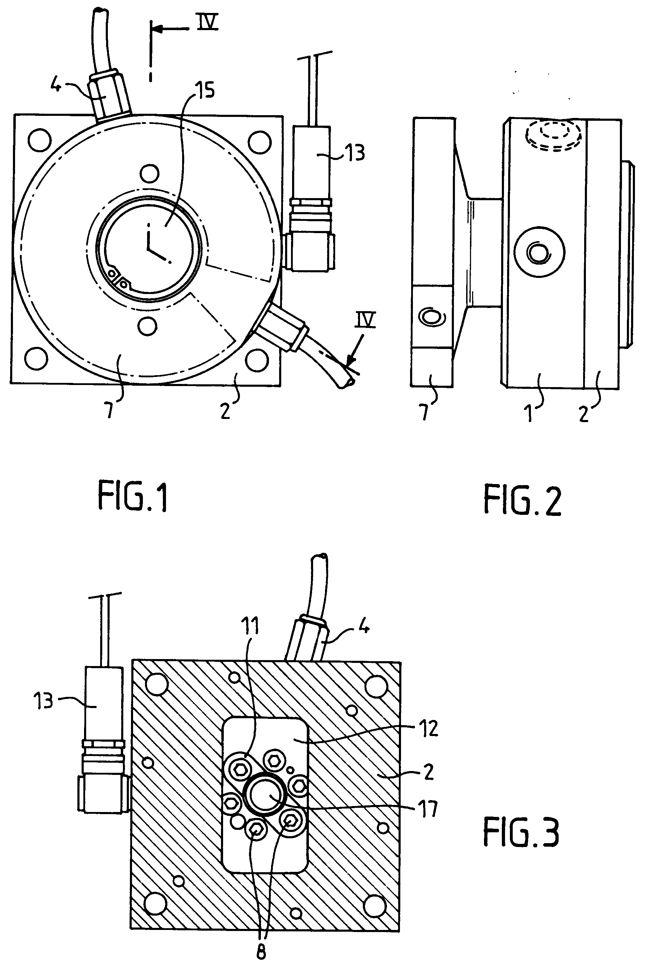

De même, si la pince du robot est soumise à une sollicitation anormale en rotation, le plateau intérieur 6 s'écarte également de l'ouverture 5 du fait de l'action des pions sphériques 9 sortant de leurs logements respectifs 10. On notera à ce propos que le mouvement de rotation du plateau intérieur 6 est en fait limité à environ ± 30° par une partie proéminente 11 venant en butée dans un évidement 12 de forme rectangulaire aménagé dans la plaque de fond 2, comme illustré sur la figure 3.

La chute de pression subséquente à l'intérieur de la chambre de compression 3 est alors immédiatement détectée par un capteur approprié 13, ce qui provoque l'arrêt du robot et permet ainsi d'éviter des accidents. Toutefois, avant de pouvoir remettre le robot en fonctionnement, une intervention humaine est généralement nécessaire sur le module d'arrêt d'urgence afin d'obturer à nouveau l'ouverture 5 au moyen du plateau intérieur 6.

Pour remédier à cet inconvénient et conformément à la présente invention, le module est équipé d'un dispositif de réarmement automatique constitué essentiellement par un vérin incorporé au flasque 7. Ce vérin comprend une chambre cylindrique 14, aménagée dans le flasque et obturé à sa partie supérieure par un bouchon 15, dans laquelle est monté un piston 16 dont la tige 17 traverse de manière étanche le plateau intérieur 6 pour venir prendre appui sur la plaque de fond 2. De préférence, la partie supérieure de la chambre cylindrique 14 est constamment alimentée en air comprimé par un embout 18, de sorte que la tige 17 du piston 16 prend appui en permanence sur la plaque de fond 2 avec une force déterminée, comme représenté sur la figure 4. Le seuil de déclenchement du module est alors fonction du différentiel de pression existant entre la chambre 14 alimentée par l'embout 18 et la chambre 3 alimentée par l'embout 4.

Ainsi, lorsque le module d'arrêt d'urgence se déclenche à la suite d'une sollicitation anormale, comme représenté par exemple sur la figure 5, il peut dans la plupart des cas se réarmer automatiquement, c'est-à-dire sans aucune intervention humaine, dès que cesse la sollicitation anormale, sous l'action de la seule tige 17 qui en prenant appui sur la plaque de fond 2, ramène le plateau intérieur 6 en position d'obturation de l'ouverture 5 afin de rétablir l'étanchéité à ce niveau. Pour que cela soit possible, il faut bien entendu que le mouvement de rotation relatif des deux parties du module ne soit pas trop important, afin que les pions sphériques 9 puissent se replacer correctement dans les cuvettes 10 du plateau. Même dans le cas où une intervention manuelle est nécessaire, le réarmement du module se trouve facilité par l'action de la tige 17, de sorte que l'emploi d'un tel module permet un gain de temps appréciable.

## Revendications

1. Module d'arrêt d'urgence pour robot ou analogue, du type comprenant un corps (1) formant chambre de compression (3) et alimenté en air sous pression, muni d'une ouverture (5) normalement obturée par un plateau intérieur (6) solidaire d'un flasque extérieur (7), le corps (1) et le flasque extérieur (7) étant respectivement destinés à être solidaires de deux éléments du robot, le plateau intérieur (6) s'écartant de l'ouverture (5) lorsque le robot est soumis à des sollicitations anormales, laissant l'air s'échapper de la chambre de compression (3), caractérisé en ce qu'il est pourvu d'un dispositif de réarmement automatique constitué par un vérin (14-16) aménagé dans le flasque (7) et dont la tige (17) traverse le plateau intérieur (6) pour venir prendre appui sur le fond (2) du corps (1).

2. Module d'arrêt d'urgence selon la revendication 1, caractérisé en ce que le vérin (14-16) est constamment alimenté en fluide sous pression, de manière que sa tige (17) prenne appui en permanence sur le fond (2) du corps (1) avec une force déterminée.

## Claims

1. An emergency stop module for a robot or the like, of the type comprising a body (1) forming a compression chamber (3) and fed with air under pressure, provided with an opening (5) which is normally closed by an inner plate (6) firmly attached to an outer flange (7), the body (1) and the outer flange (7) being intended to be firmly attached to two elements respectively of the robot, the inner plate (6) moving away from the opening (5) when the robot is submitted to abnormal stress, thus allowing the air to escape from the compression chamber (3), characterized in that it is provided with an automatic resetting device formed of a piston-cylinder unit (14-16) arranged in the flange (7) and the rod (17) of which passes through the inner plate (6) to rest against the bottom (2) of the body (1).

2. The emergency stop module according to claim 1, characterized in that the piston-cylinder unit (14-16) is continuously fed with fluid under pressure, so that its rod (17) rests continuously against the bottom (2) of the body (1) with a given force.

## Patentansprüche

1. Notausschaltmodul für Roboter oder dergleichen, nach der Art mit einem eine Druckkammer (3) bildenden Körper (1), dem Druckluft zugeführt wird und der eine Öffnung (5) aufweist, welche normalerweise von einer mit einem Außenflansch (7) fest verbundenen Innenscheibe (6) abgeschlossen wird, wobei der Körper (1) und der Außenflansch (7) dazu bestimmt sind, jeweils mit zwei Teilen des Roboters fest verbunden zu sein, und wobei die Innenscheibe (6) von der Öffnung (5) wegrückt, wenn der Roboter anormalen Belastungen ausgesetzt wird, und dabei die Luft aus der Druckkammer (3) abläßt, dadurch gekennzeichnet, daß er mit einer automatischen Wiedereinschaltvorrichtung versehen ist, die aus einem Zylinder (14-16) besteht, der im Flansch (7) angeordnet ist und dessen Stange (17) durch die Innenscheibe (6) hindurch geführt wird und sich am Boden (2) des Körpers (1) abstützt.

2. Notausschaltmodul nach Anspruch 1, dadurch gekennzeichnet, daß dem Zylinder (14-16) ständig ein Druckfluid zugeführt wird, so daß seine Stange (17) sich stets am Boden (2) des Körpers (1) mit einer bestimmten Kraft abstützt.
